# FASCICULE DE BREVET EUROPEEN

(11) **EP 0 755 860 B1**
(45) Date de publication et mention de la délivrance du brevet: **07.11.2001**
(21) Numéro de dépôt: 96401686.9
(22) Date de dépôt: 26.07.1996
(51) Int. Cl.: B64D 11/06

(54) **Siège transformable en couchette pour aéronef**
In eine Liege veränderbarer Sitz für Flugzeuge
Convertible seat/bed for aircraft

(30) Priorité: 27.07.1995 FR 9509156
(43) Date de publication de la demande: 29.01.1997
(73) Titulaire: SOCIETE INDUSTRIELLE ET COMMERCIALE DE MATERIEL AERONAUTIQUE (SICMA) SOCIETE ANONYME, F-36100 Issoudun (FR)
(72) Inventeur: Marechal, Robert, 75116 Paris (FR)
(74) Mandataire: Derambure, Christian

(56) Documents cités:
- EP-A- 0 628 445
- FR-A- 2 692 121
- GB-A- 447 327

## Description

L'invention vise un dispositif d'adaptation de la position relative d'une assise et d'un dossier de siège, et un siège équipé de ce dispositif.

Le dossier est pivotant entre une position siège droite et une position couchette rabattue, pour que l'assise du siège ait une position convenable adaptée à celle du dossier. On sait qu'un siège possède un bâti, un dossier monté pivotant sur le bâti, et une assise.

Le siège considéré ici est un siège d'aéronef.

Ces sièges doivent répondre à des exigences spécifiques tenant à la sécurité, au poids, au coût, à la durabilité, à la résistance à des conditions d'usage difficiles.

Pour les passagers, il est également requis de permettre l'inclinaison du dossier. En général, celle-ci est de l'ordre de quelques degrés.

On connaît déjà des sièges de passagers d'aéronef dans lesquels le dossier peut être rabattu jusqu'à une position proche de l'horizontale.

Cependant, il se pose alors un problème de positionnement relatif de la partie du siège formant assise par rapport au dossier.

Citons ici des documents relatifs à des sièges à dossier ajustable.

Le document GB-A-447.327 décrit un siège réglable, dont le dossier peut être changé de position jusqu'à une position complètement abaissée, sans que l'occupant du siège n'ait besoin de se lever lors de ce changement.

Quand l'inclinaison du dossier est augmentée, le siège entier et son dossier sont conjointement abaissés vers le sol, puisque le cadre d'assise est monté via des plaques triangulaires, sur le cadre de dossier.

Le document FR-A-2.692.121 décrit un siège de véhicule automobile terrestre, avec une timonerie d'asservissement des déplacements relatifs d'assise et de dossier.

Pour assurer qu'une ceinture de sécurité embarquée sur le siège ait ses points d'ancrage dans une zone appropriée du siège, l'assise et le dossier restent dans une position relative immuable pour des positions normales et de détente, afin de limiter le risque de faire glisser le passager sur le siège sous la ceinture en cas de choc frontal.

Le document EP-A-628.445 décrit aussi un siège de véhicule automobile terrestre, avec une timonerie d'asservissement des déplacements relatifs d'assise et de dossier, et un dispositif selon le préambule de la revendication, qui est apte à être utilisé pour un siège d'aéronef.

De manière que l'occupant du siège soit retenu efficacement, deux modes de déplacements concomitants, l'un faisant reculer la partie arrière de l'assise tant en faisant s'abaisser sa partie avant, l'autre entraînant l'assise de manière concomitante en l'avançant et la soulevant.

L'invention vise à résoudre les problèmes évoqués, dans le cas particulier d'un siège d'aéronef devant répondre aux exigences rappelées plus haut.

A cet effet, un premier objet de l'invention est un dispositif comportant deux ensembles support et d'entraînement destinés à être disposés latéralement de part et d'autre du siège, et tel que défini par les revendications.

Ainsi, un mouvement de passage du dossier de sa position siège droite à sa position couchette provoque au moins un mouvement d'élévation de l'assise par rapport à un siège en position normale d'utilisation. Inversement, le passage du dossier de sa position couchette à sa position siège droite provoque au moins un mouvement opposé d'abaissement de l'assise.

Ce mouvement d'élévation/abaissement est plus important vers l'avant de l'assise opposé au dossier que vers l'arrière à proximité du dossier.

Un deuxième objet de l'invention est un siège selon les revendications.

D'autres avantages de l'invention résultent de la description qui suit en référence aux dessins donnés à titre d'exemples non limitatifs.

Les figures 1, 2 et 3 sont trois vues schématiques de côté illustrant un siège d'aéronef selon l'invention en positions respectivement siège droit, siège incliné et couchette rabattue.

Les figures 4 et 5 sont deux vues schématiques, partielles, à plus grande échelle, de côté, illustrant le siège et le dispositif dont il est pourvu respectivement en positions siège droite et couchette rabattue. Le siège est dépourvu de coussins pour une meilleure compréhension.

Les figures 6 et 7 sont deux vues partielles en perspective illustrant le siège selon les figures 4 et 5 respectivement.

Un siège d'aéronef conforme à l'invention comprend un bâti 1 incluant notamment un piétement, un dossier 2, une assise 3.

Le dossier 2 et l'assise 3 comportent des pièces de résistance et notamment des parois respectivement 4 et 5 auxquelles sont fixés respectivement des coussins 6 et 7.

Sauf indication contraire, on se réfère essentiellement, s'agissant du dossier 2 et de l'assise 3, à leurs pièces de résistance.

Dans la réalisation représentée, le siège d'aéronef comporte, en outre, articulés à l'assise 3, vers l'avant, un repose jambe/pied 8 ayant plusieurs parties articulées entre elles à savoir trois parties successives respectivement 8a, 8b et 8c.

Le qualificatif "'avant" se réfère à un siège d'aéronef en position normale d'utilisation. Il en est de même des autres qualificatifs tels que "arrière", "haut", "bas", au-dessus", "en-dessous", "horizontal", "vertical", etc.

Le siège d'aéronef peut également inclure un ou des accoudoirs 9 latéraux, une tablette avant 10, une tablette arrière de dossier et tous autres accessoires.

Le qualificatif de "latéral" se rapporte à ce qui se situe de part et d'autre du siège.

Dans la réalisation représentée, le bâti 1 inclut deux longerons de résistance en forme de tube, s'étendant horizontalement et transversalement en-dessous de l'assise 3, respectivement vers l'avant, 11, et vers l'arrière, 12.

Les deux longerons 11, 12 sont en général commun à plusieurs sièges d'aéronef placés côte à côte.

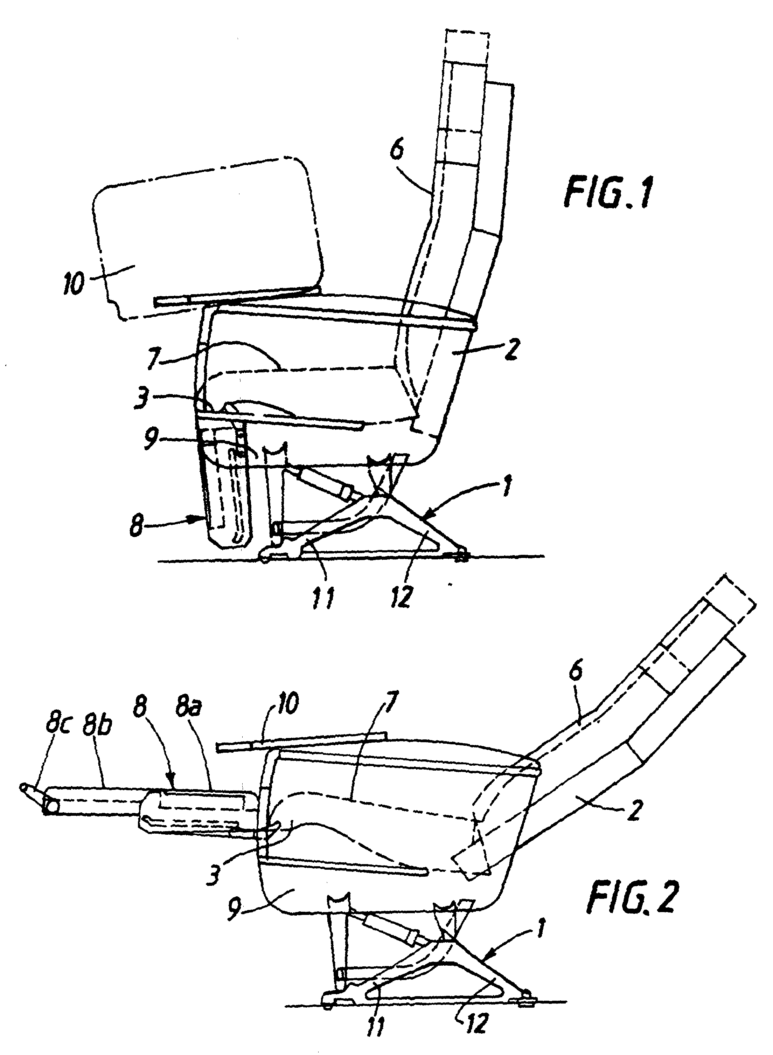

Les deux longerons s'étendent perpendiculairement à un plan de symétrie vertical du siège d'aéronef parallèle aux plans des figures 1 à 5.

Le dossier 2 est porté par et articulé au bâti 1 autour d'un axe 13 horizontal et transversal.

L'axe 13 est situé à un niveau au-dessus de celui de l'assise 3. Il est légèrement décalé par rapport à l'assise 3 vers l'arrière.

L'axe 13 est porté à l'extrémité supérieure de deux joues latérales 14 en forme générale de triangle curviligne dirigé vers le haut, portées par le longeron arrière 12 et faisant partie du bâti 1.

A cette fin, le dossier 2 comporte, fixé rigidement à la paroi 4, deux flasques latéraux 15, s'étendant au-delà de ladite paroi 4.

Le dossier 2 est prolongé, au-delà de l'axe 13, par les deux flasques 15 ayant une longueur suffisante.

A leurs parties extrêmes opposées à la paroi 4, les flasques 15 supportent un axe 16 pour le dispositif 17 dont est pourvu le siège d'aéronef.

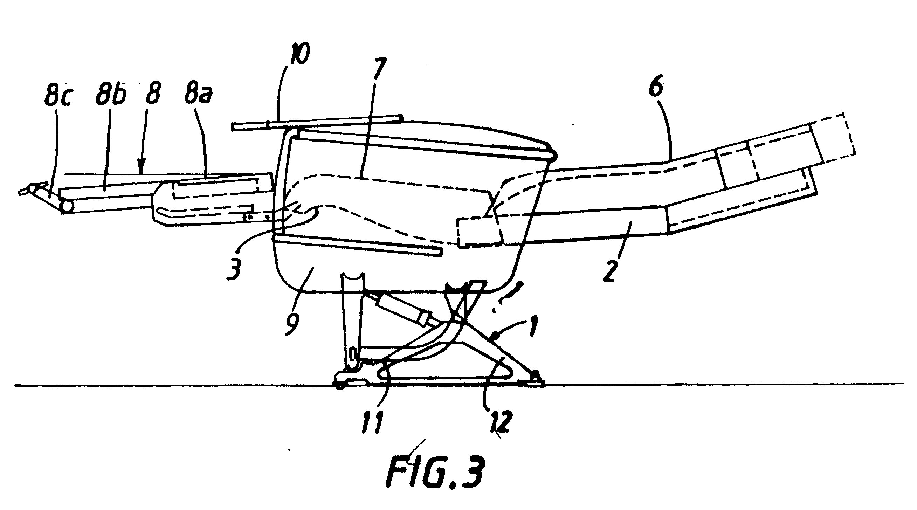

Le dossier 2 est susceptible, en situation normale d'utilisation, de se trouver dans deux positions extrêmes à savoir respectivement une position siège droite (figures 1, 4, 6) et une position couchette rabattue (figures 3, 5, 7).

Dans la position siège, le dossier 2 est dirigé vers le haut, sensiblement verticalement et, selon une disposition typique, légèrement incliné vers l'arrière, la paroi 4 faisant, au moins vers le bas un angle de l'ordre de 18° avec la verticale.

Dans cette position siège, selon la réalisation représentée, l'assise 3 fait, avec la verticale un angle de l'ordre de 90°.

Dans la position couchette, le dossier 2 est sensiblement à l'horizontale est dirigé vers l'arrière.

Dans la réalisation représentée, la paroi 4 fait un angle de l'ordre de 86° avec la verticale.

Le dispositif 17 est tel que l'assise 3 ait un positionnement convenable adapté à celui du dossier 2.

En l'occurrence et dans la réalisation représentée, l'assise 3 fait alors avec la verticale un angle de l'ordre de 85°.

Le siège d'aéronef peut également se trouver dans une position intermédiaire où le dossier 2 est incliné entre sa position droite et sa position rabattue (figure 2).

Le dispositif 17 comprend deux ensembles support et d'entraînement 18 destinés à être disposés latéralement de part et d'autre du siège d'aéronef. Ces deux ensembles 18 sont semblables. Pour cette raison, un seul est décrit en détail, les deux ensembles étant disposés symétriquement l'un par rapport à l'autre par rapport au plan vertical de symétrie du siège.

Chaque ensemble 18 comprend des premiers et des seconds moyens mécaniques articulés et déformables, respectivement 19, 20, destinés à être associés mécaniquement d'une part au dossier 2, à pivotement, autour de l'axe 16 commun aux deux moyens 19, 20, et d'autre part à l'assise 3 respectivement dans ses parties proximale 21, c'est-à-dire arrière, et distale 22, c'est-à-dire avant, par rapport au dossier 2. La fonction des deux ensembles 18 de moyens 19, 20 est d'une part de supporter l'assise 3 et d'autre part de coupler les mouvements du dossier 2 et de l'assise 3 de manière que le mouvement de passage du dossier 2 de sa position siège droite à sa position couchette provoque au moins un mouvement d'élévation de l'assise 3 et que, inversement, le passage du dossier 2 de sa position couchette à sa position siège droite provoque au moins un mouvement opposé d'abaissement de l'assise 3.

Les premiers et seconds moyens 19, 20 ont pour fonction de coupler les mouvements du dossier 2 et de l'assise 3 de manière que le mouvement de passage du dossier 2 de sa position siège à sa position couchette provoque également un mouvement combiné de rapprochement général de l'assise 3 vers le dossier 2 et que, inversement, le passage du dossier 2 de sa position couchette à sa position siège provoque un mouvement opposé d'éloignement de l'assise 3.

Le mouvement d'élévation/abaissement de l'assise 3 est plus important vers l'avant de l'assise (à l'opposé du dossier 2) que vers l'arrière (à proximité du dossier 2).

Pour une course de pivotement du dossier 2 entre la position siège et la position couchette comprise entre de l'ordre de 60° à 90° et notamment de l'ordre de 70°, le mouvement d'élévation/abaissement de l'assise 3 est de l'ordre de 2 à 4 fois plus important vers l'avant que vers l'arrière, l'assise ayant un mouvement de rotation de l'ordre de quelque degrés et notamment de l'ordre de 6°.

Les premiers moyens 19 de chaque ensemble 18 comportent une première et une seconde biellettes 24, 25 respectivement.

Les seconds moyens 20 comportent également une première et une seconde biellettes 26, 27 respectivement.

Ces biellettes 24, 25, 26, 27 sont rigides, monoblocs ou réalisées en plusieurs parties. Elles s'étendent dans des directions parallèles au plan vertical de symétrie du siège d'aéronef.

On décrit maintenant plus spécialement les premiers moyens 19 de chaque ensemble 18.

Les deux biellettes 24, 25 sont articulées entre elles à leurs premières parties extrêmes autour d'un axe 28, horizontal et transversal.

La première biellette 24 est articulée à sa seconde partie extrême au dossier 2 autour de l'axe 16.

La seconde biellette 25 est articulée à sa seconde partie extrême au bâti 1 autour d'un axe 29 horizontal et transversal.

Tant la première que la seconde biellette 24, 25 est articulée à l'assise 3, dans sa partie proximale arrière 21 par l'axe 28. Cette articulation est à coulissement longitudinal avant-arrière (ou inversement), c'est-à-dire dans le plan de l'assise 3.

Les deux biellettes 24, 25 forment un compas déformable interposé entre le dossier 2 et le bâti 1, supportant et entraînant l'assise 3.

Les deux biellettes 24, 25 sont rectilignes ou sensiblement rectilignes et de longueur assez courte.

On décrit maintenant plus spécialement les seconds moyens 20 de chaque ensemble 18.

Les deux biellettes 26, 27 sont articulées entre elles à leurs deux premières parties extrêmes autour d'un axe 30 horizontal et transversal.

La première biellette 26 est articulée à sa seconde partie extrême au dossier 2 autour de l'axe 16.

La seconde biellette 27 est articulée à sa seconde partie extrême à l'assise 3 dans sa partie distale avant 23 par un axe 31 horizontal et transversal. Cette articulation est sans coulissement longitudinal tel que celui mentionné en relation avec l'axe 28.

La seconde biellette 27 est articulée également dans sa partie médiane au bâti 1 autour d'un axe 32 horizontal et transversal.

Les deux biellettes 26, 27 forment un double levier interposé entre le dossier 2 et l'assise 3 en prenant appui sur le bâti 1.

La première biellette 26 est rectiligne ou sensiblement rectiligne et de plus grande longueur que la seconde biellette 27 qui est coudée et articulée au bâti 1 dans sa partie médiane coudée. Le coude ainsi formé a un angle de l'ordre de 90 à 130°, notamment au voisinage de 110°.

Ainsi que cela résulte de ce qui précède, l'assise 3 n'est pas supportée directement par le bâti 1 mais indirectement et uniquement par les deux ensembles 18.

A cet effet, l'assise 3 comporte dans sa partie proximale 21 deux lumières, glissières ou équivalent 33 coopérant avec l'axe d'articulation 28 des premiers moyens 19 et des deux biellettes 24, 25.

Ces lumières, glissières ou équivalent 33 ont pour fonction de permettre un déplacement relatif de l'axe 28 par rapport à l'assise parallèlement ou sensiblement parallèlement au plan de la paroi 5.

Le cas échéant, l'axe 28 peut, être pourvu de galets ou équivalent facilitant le coulissement.

La longueur des lumières, glissières ou équivalent est suffisante pour permettre le débattement voulu de l'axe 28.

La paroi 5 de l'assise est pourvue, latéralement de deux rebords latéraux attenants 34 dirigés vers le bas et s'étendant parallèlement ou sensiblement parallèlement à la paroi 5.

D'un côté vers l'arrière, dans les deux rebords 34 sont ménagées les lumières, glissières ou équivalent 33.

De l'autre côté, vers l'avant, les deux rebords 34 comportent deux excroissances en forme d'oreilles 35, dirigées vers le bas où se trouve l'axe d'articulation 31.

Les axes 13, 29 et 32 sont fixés et portés par le bâti 1.

Ces trois axes définissent, en élévation transversale sur un plan parallèle au plan de symétrie longitudinal du siège d'aéronef, un triangle obtus au sommet défini par l'axe 29, l'angle d'ouverture étant de l'ordre de 120°. Le côté du triangle défini par les axes 29 et 32 est sensiblement horizontal ou faiblement incliné sur l'horizontale, les deux axes 29, 32 étant situés au voisinage d'un même plan horizontal et l'axe 32 étant à un niveau légèrement plus haut que celui de l'axe 29.

Les axes 16, 28, 30, 31 définissent, eux, un quadrilatère déformable ; tant en forme qu'en position. Les deux petits côtés opposés du quadrilatère, définis respectivement par les axes 16 et 28 d'une part, 30 et 31 d'autre part sont de longueur constante contrairement aux deux grands côtés opposés définis respectivement par les axes 16 et 31 d'une part, 28 et 30 d'autre part.

Le dispositif 17 est au moins en position siège, substantiellement placé en-dessous de l'assise 3, les flasques 15 ayant une longueur telle qu'en position droite siège, l'axe 16 des premiers et seconds moyens 19, 20 soit situé à proximité du plan de l'assise 3 défini par la paroi 5. Dans la réalisation représentée, l'axe 16 est, dans la position droite siège légèrement au-dessus de ce plan.

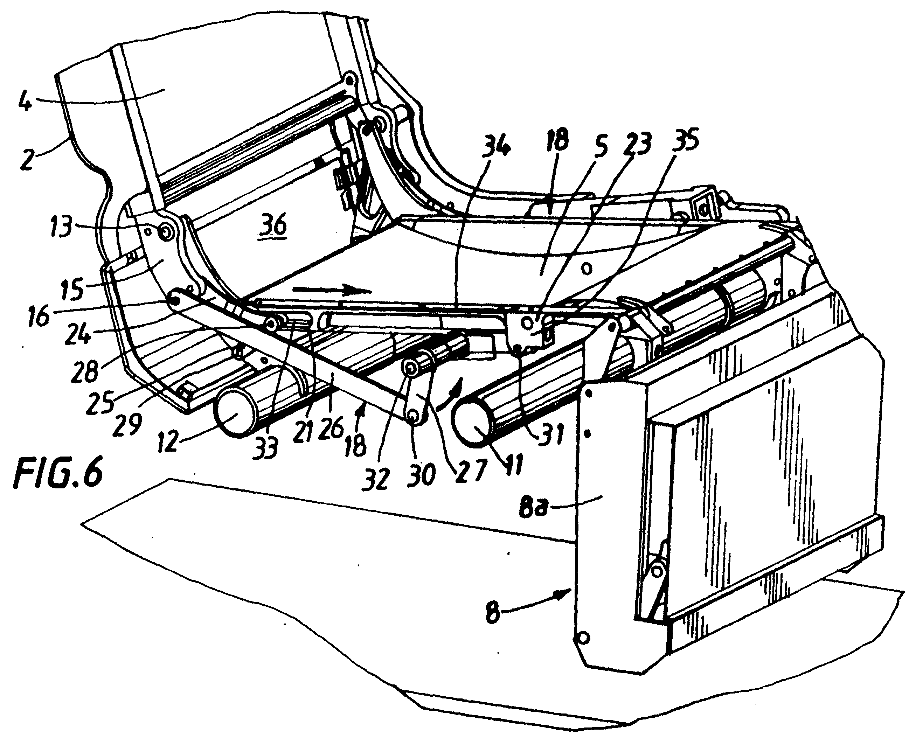

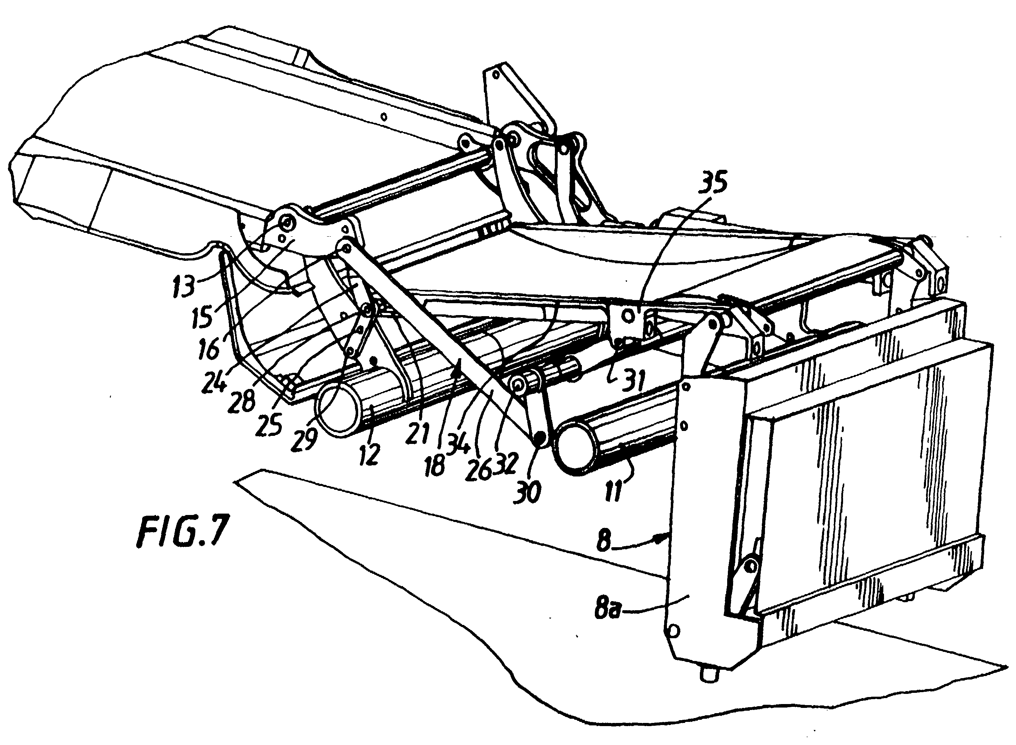

Ainsi, que cela est bien visible sur les figures 6 et 7, il existe vers l'arrière et le bas des parois 4 et 5 du siège d'aéronef un espace libre 36 permettant tout à la fois le débattement des pièces constitutives du dispositif 17 et du siège ainsi que le coincement des coussins 6, 7.

En position couchette, le dispositif 17 est pour partie placé en-dessous de l'assise 3 vers l'avant et pour partie au-dessus vers l'arrière. Toutefois, cela n'est pas gênant car le dispositif 17 est placé latéralement et dans l'épaisseur des coussins 6, 7.

Par conséquent, en toute occurrence, le dispositif 17 est invisible ou quasiment invisible lorsque les coussins 6, 7 sont en place.

En position couchette, les axes 16, 28 et 29 sont sensiblement situés à l'aplomb, l'axe 16 au-dessus, l'axe 29 en-dessous et l'axe 28 entre eux deux.

En position siège droit, les axes 16, 28 et 29 définissent un triangle, l'axe 16 étant le plus vers l'arrière et au-dessus, l'axe 28 étant le plus vers l'avant et l'axe 29 étant le plus en-dessous.

Les deux biellettes 24, 25 des premiers moyens 19 forment entre elles un angle de l'ordre de 130° à 160° notamment au voisinage de 145° en position couchette et de l'ordre de 30° à 70° notamment au voisinage de 50° en position siège droit. Ces deux biellettes 24, 25 sont disposées sensiblement symétriquement de part et d'autre du plan de l'assise 3 défini par la paroi 5.

L'axe d'articulation 30 des deux biellettes 26, 27 des seconds moyens 20 est situé en-dessous et sensiblement à l'aplomb de l'axe d'articulation 32 des seconds moyens 20 au bâti 1.

Plus précisément, l'axe 30 est situé respectivement vers l'arrière et vers l'avant par rapport à l'aplomb de l'axe d'articulation 32 selon que la position est celle de siège droit ou de couchette.

L'assise 3 étant inclinée d'avant vers l'arrière et de haut en bas, l'axe d'articulation 28 des premiers moyens 19 est situé à un niveau plus bas et l'axe d'articulation 31 des seconds moyens 20 à un niveau plus haut.

L'axe d'articulation 32 des seconds moyens 20 au bâti 1 est situé sensiblement à l'aplomb de la partie médiane de l'assise 3 entre les axes 28 et 31 et donc entre les lumières, glissières ou équivalent 33 et les excroissances 35.

L'axe d'articulation 31 des seconds moyens 20 à l'assise 3 est situé vers l'avant de l'axe d'articulation 30 des deux biellettes 26, 27 ou de l'axe d'articulation 32 des seconds moyens 20 (c'est-à-dire de la seconde biellette 27) au bâti 1.

On décrit maintenant le fonctionnement du dispositif 17 et du siège en partant de la position siège droit.

Dans cette position, le compas formé par les deux biellettes 24, 25 est le plus fermé, l'axe 28 étant situé plutôt vers l'avant des lumières, glissières ou équivalent 33.

La biellette 26 est alors la plus proche de l'horizontale. La biellette 27 est pivotée vers le bas et l'avant, sa partie s'étendant entre les axes 32, 35 s'étendant sensiblement parallèlement au plan d'assise défini par la paroi 5.

L'utilisateur peut alors, grâce à une action sur un bouton situé notamment sur l'accoudoir, incliner le dossier 2 vers l'arrière.

Le dossier 2 passe par la position intermédiaire représentée sur la figure 2 pour atteindre la position couchette.

Lors du déplacement du dossier 2, par pivotement, le dispositif 17 permet d'assurer un déplacement convenable de l'assise 3 comme déjà indiqué.

Dans la position couchette, le flasque 15 et la biellette 26 occupent une position inférieure sensiblement symétrique de la position supérieure qu'ils avaient en position siège droit.

Dans la position couchette, le compas 24, 25 est le plus ouvert, l'axe 28 étant situé plutôt vers l'arrière des lumières, glissières ou équivalent 33.

La biellette 26 est alors la plus inclinée par rapport à l'horizontale. La biellette 27 est pivotée vers le haut et l'arrière.

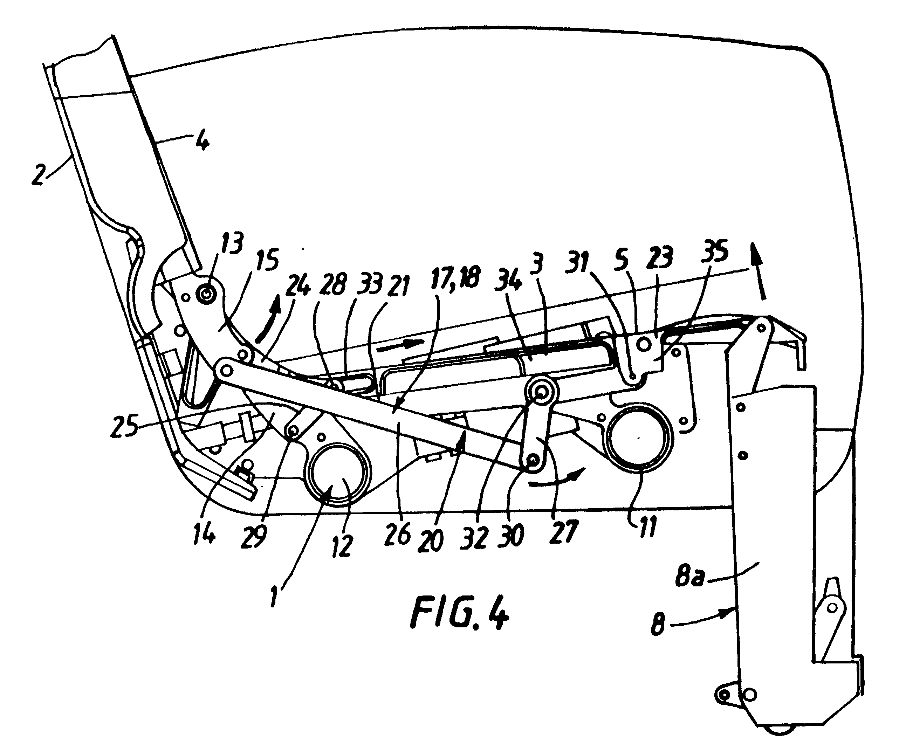

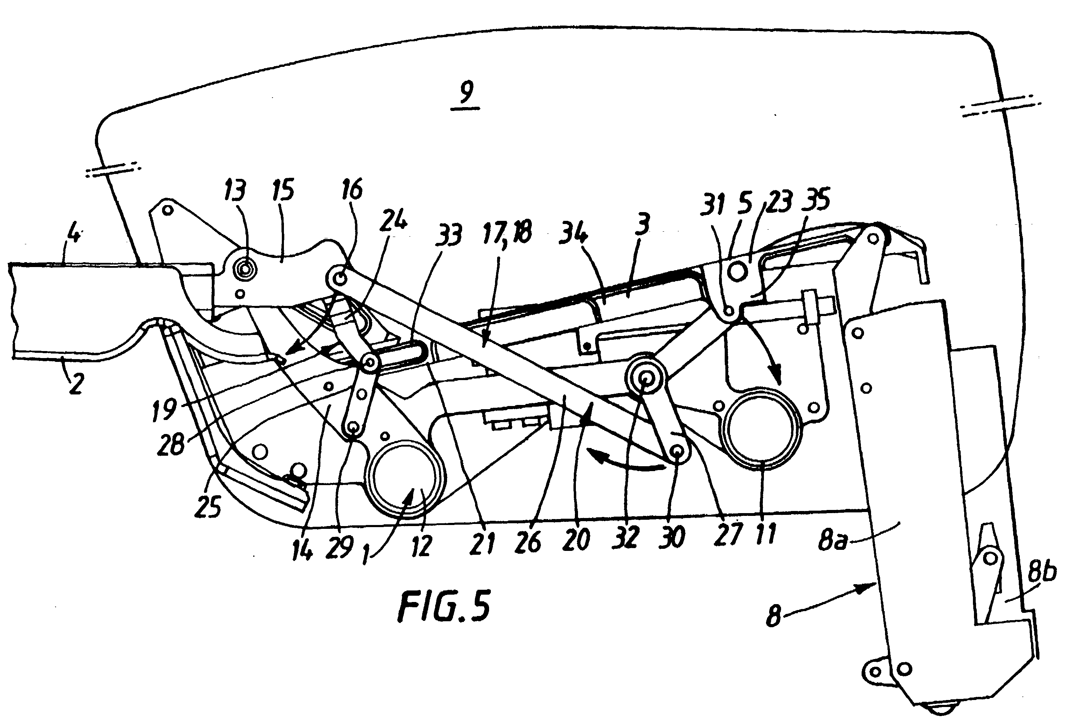

Les mouvements sont illustrés sur les figures 4 et 5 par des flèches.

## Revendications

1. Dispositif destiné à un siège d'aéronef, ayant un dossier (2) pivotant entre une position siège droite et une position couchette rabattue pour qu'une assise (3) du siège ait un positionnement convenable adapté à celui du dossier (2), comportant deux ensembles (18) de support et d'entraînement destinés à être disposés latéralement de part et d'autre du siège, chaque ensemble (18) comprenant des premiers et des seconds moyens mécaniques géométriquement déformables (19, 20) articulés, avec des axes (16, 28, 31) d'association mécanique d'une part à pivotement au dossier (2) du siège de destination, et d'autre part à l'assise (3) du siège de destination respectivement dans ses parties proximale (21) et distale (23) par rapport au dossier (2), aptes à supporter l'assise (3) et à coupler les mouvements du dossier (2) et de l'assise (3) de manière que le mouvement de passage du dossier (2) de sa position siège droite à sa position couchette, provoque au moins un mouvement d'élévation de l'assise (3) et que, inversement, le passage du dossier (2) de sa position couchette à sa position siège droite provoque au moins un mouvement opposé d'abaissement de l'assise (3), **caractérisé en ce que** les premiers et les seconds moyens (19, 20) respectivement de chacun des deux ensembles (18) comprennent chacun deux biellettes (24, 25, 26, 27) articulées entre elles à leurs deux premières parties extrêmes, une première biellette (24, 26) de chacun des deux moyens (19, 20) étant destinée à être articulée à sa seconde partie extrême au dossier (2) autour d'un axe (16) du dossier et une seconde biellette (25, 27) de chacun des deux moyens (19, 20) étant destinée à être articulée à l'assise (3) autour d'axes (28, 31) de l'assise (3), l'une des deux biellettes (24, 25, 26, 27) étant destinée à être articulée à une partie du siège appartenant au bâti (1), autour d'un axe (29, 32) du bâti (1).

2. Dispositif selon la revendication 1, **caractérisé en ce que** les premiers et seconds moyens (19, 20) de chacun des deux ensembles (18) ont pour fonction de coupler les mouvements du dossier (2) et de l'assise (3) de manière que le mouvement de passage du dossier (2) de sa position siège droite à sa position couchette provoque également un mouvement combiné de rapprochement général de l'assise (3) vers le dossier (2) et que, inversement, le passage du dossier (2) de sa position couchette à sa position siège droite provoque un mouvement opposé d'éloignement de l'assise (3).

3. Dispositif selon la revendication 1 ou 2, **caractérisé en ce que** le mouvement d'élévation/abaissement est plus important vers l'avant de l'assise (3) opposé au dossier (2) que vers l'arrière à proximité du dossier (2).

4. Dispositif selon l'une des revendications 1 à 3, **caractérisé en ce que** les premiers moyens (19) de chacun des deux ensembles (18) comprennent deux biellettes (24, 25) articulées entre elles à leurs deux premières parties extrêmes autour d'un axe (28), une première biellette (24) étant destinée à être articulée à sa seconde partie extrême au dossier (2) autour d'un axe (16), une seconde biellette (25) étant destinée à être articulée à sa seconde partie extrême à une partie du siège appartenant au bâti (1), autour d'un axe (29), les deux biellettes (24, 25) étant articulées à l'assise (3) par leur axe d'articulation (28) des premières parties extrêmes.

5. Dispositif selon la revendication 4, **caractérisé en ce que** l'axe d'articulation (28) des deux biellettes (24, 25) sur l'assise (3) est à coulissement dans le plan de l'assise (3).

6. Dispositif selon la revendication 4 ou 5, **caractérisé en ce que** les deux biellettes (24, 25) de chacun des premiers moyens (19) sont rectilignes ou sensiblement rectilignes.

7. Dispositif selon l'une des revendications 4 à 6, **caractérisé en ce que** les deux biellettes (24, 25) de chacun des premiers moyens (19) forment un compas déformable interposé entre le dossier (2) et une partie du siège appartenant au bâti (1).

8. Dispositif selon l'une des revendications 1 à 3, **caractérisé en ce que** les seconds moyens (20) de chacun des deux ensembles (18) comprennent deux biellettes (26, 27) articulées entre elles à leurs deux premières parties extrêmes autour d'un axe (30), une première biellette (26) étant destinée à être articulée à sa seconde partie extrême au dossier (2) autour d'un axe (16), une seconde biellette (27) étant destinée à être articulée d'une part à sa seconde partie extrême à l'assise (3) autour d'un axe (31) et d'autre part dans sa partie médiane à une partie du siège appartenant au bâti (1) autour d'un axe (32).

9. Dispositif selon la revendication 8, **caractérisé en ce que** l'axe d'articulation (31) de la seconde biellette (27) à l'assise (3) est sans coulissement.

10. Dispositif selon la revendication 8 ou 9, **caractérisé en ce que** la première biellette (26) est rectiligne et de plus grande longueur que la seconde biellette (27) qui est coudée.

11. Dispositif selon la revendication 10, **caractérisé en ce que** la seconde biellette (27) est articulée à la partie du siège formant bâti (1) dans sa partie médiane et coudée.

12. Dispositif selon l'une des revendications 1 à 11, **caractérisé en ce que** chacune des biellettes (24, 25, 26, 27) faisant partie des premiers, seconds moyens (19, 20) est monobloc ou réalisée en plusieurs parties.

13. Siège d'aéronef ayant un bâti (1), un dossier (2) monté pivotant sur le bâti autour d'un axe (13) et une assise (3), **caractérisé en ce qu'**il inclut un dispositif selon l'une des revendications 1 à 12.

14. Siège selon la revendication 13, **caractérisé en ce que** le dossier (2) est articulé au bâti (1) au-dessus de l'assise (3) et prolongé, au-delà de son axe d'articulation (13) par deux flasques (15), situés latéralement de part et d'autre du siège, auxquels sont articulés les premiers et seconds moyens (19, 20) de chacun des deux ensembles support et d'entraînement (18) autour d'un axe commun (16).

15. Siège selon la revendication 13 ou 14, **caractérisé en ce que** l'assise (3) est supportée uniquement par les deux ensembles support et d'entraînement (18).

16. Siège selon l'une des revendications 13 à 15, **caractérisé en ce que** l'assise (3) comporte dans sa partie proximale (21) deux lumières, glissières ou équivalent (33) coopérant avec un axe d'articulation (28) des premiers moyens (19).

17. Siège selon la revendication 16, **caractérisé en ce que** les deux lumières, glissières ou équivalent (33) coopèrent avec l'axe d'articulation (28) des deux biellettes (24, 25) des deux ensembles support et d'entraînement (18).

18. Siège selon la revendication 16 ou 17, **caractérisé en ce que** les deux lumières, glissières ou équivalent (33) sont ménagées dans deux rebords latéraux (34) attenants à la paroi d'assise (5) et s'étendent parallèlement ou sensiblement parallèlement à cette paroi d'assise (5).

19. Siège selon la revendication 18, **caractérisé en ce que** les deux rebords 34 sont dirigés vers le bas.

20. Siège selon l'une des revendications 13 à 19, **caractérisé en ce que** l'assise (3) comporte dans sa partie distale (23) un axe d'articulation (31) des seconds moyens (20).

21. Siège selon les revendications 18 et 20, **caractérisé en ce que** l'axe d'articulation (31) est porté par les deux rebords latéraux (34) de l'assise (3).

22. Siège selon la revendication 21, **caractérisé en ce que** chaque rebord latéral (34) comporte une excroissance (35) en forme d'oreille, dirigée vers le bas où se trouve l'axe d'articulation (31).

23. Siège selon l'une des revendications 13 à 22, **caractérisé en ce qu'**au moins en position siège, le dispositif (17) est substantiellement placé en-dessous de l'assise (3).

24. Siège selon l'une des revendications 14 à 22, **caractérisé en ce que** les flasques (15) ont une longueur telle qu'en position siège droit, l'axe (16) des premiers et seconds moyens (19, 20) soit situé à proximité du plan de l'assise (3).

25. Siège selon l'une des revendications 13 à 24, **caractérisé en ce que** l'axe d'articulation (29) des premiers moyens (19) du bâti (1) est situé en-dessous et sensiblement à l'aplomb de l'axe d'articulation (16) des premiers moyens (19) sur le dossier (2) en position couchette.

26. Siège selon l'une des revendications 13 à 25, **caractérisé en ce que** les deux biellettes (24, 25) des premiers moyens (19) forment entre elles un angle de l'ordre de 130° à 160°, notamment au voisinage de 145°, en position couchette et de l'ordre de 30° à 70°, notamment au voisinage de 50°, en position siège droit.

27. Siège selon l'une des revendications 13 à 26, **caractérisé en ce que** les deux biellettes (24, 25) des premiers moyens sont disposées sensiblement symétriquement de part et d'autre du plan de l'assise (3).

28. Siège selon l'une des revendications 13 à 27, **caractérisé en ce que** l'axe d'articulation (30) des deux biellettes (26, 27) des seconds moyens (20) est situé en-dessous et sensiblement à l'aplomb de l'axe d'articulation (32) des seconds moyens (20) au bâti (1).

29. Siège selon la revendication 28, **caractérisé en ce que** l'axe d'articulation (30) des deux biellettes (26, 27) des seconds moyens (20) est situé respectivement vers l'arrière et vers l'avant par rapport à l'aplomb de l'axe d'articulation des seconds moyens (20) au bâti (1) en position siège droit et couchette.

30. Siège selon l'une des revendications 13 à 29, **caractérisé en ce que** les axes d'articulation (29, 32) des premiers et seconds moyens (19, 20) au bâti (1) sont situés au voisinage d'un même plan horizontal.

31. Siège selon la revendication 30, **caractérisé en ce que** l'axe d'articulation (28) des premiers moyens (19) est situé à un niveau plus bas et l'axe d'articulation (31) des seconds moyens (20) à un niveau plus haut.

32. Siège selon l'une des revendications 13 à 31, **caractérisé en ce que** l'axe d'articulation (32) des seconds moyens (20) au bâti (1) est situé sensiblement à l'aplomb de la partie médiane de l'assise (3).

33. Siège selon l'une des revendications 13 à 32, **caractérisé en ce que** la seconde biellette (27) des seconds moyens (20) fait un coude de l'ordre de 90° à 130°, notamment au voisinage de 110°.

34. Siège selon l'une des revendications 13 à 33, **caractérisé en ce que** l'axe d'articulation (31) des seconds moyens (20) à l'assise (3) est situé vers l'avant de l'axe d'articulation (30) des deux biellettes (26, 27) ou de l'axe d'articulation (32) des seconds moyens (20) au bâti (1).

35. Siège selon l'une des revendications 13 à 34, **caractérisé en ce que** la seconde biellette (27) des seconds moyens (20) s'étend, en position siège droit pour partie sensiblement parallèlement au plan d'assise.

36. Siège selon l'une des revendications 13 à 35, **caractérisé en ce que** la course de pivotement du dossier entre la position siège et la position couchette est de l'ordre de 60° à 90°, notamment de l'ordre de 70°.

37. Siège selon la revendication 36, **caractérisé en ce que** le mouvement d'élévation/abaissement de l'assise (3) est de l'ordre de 3 à 4 fois plus important vers l'avant que vers l'arrière.

38. Siège selon l'une des revendications 13 à 37, **caractérisé en ce que** l'assise (3) a un mouvement de rotation de l'ordre de quelques degrés.

39. Siège selon l'une des revendications 13 à 38, **caractérisé en ce qu'**il comporte en outre, articulé à l'assise (3) vers l'avant, un repose jambe/pied (8) en une ou plusieurs parties articulées (8a, 8b, 8c).

40. Siège selon l'une des revendications 13 à 39, **caractérisé en ce qu'**il comporte également des coussins d'assise et de dossier (6, 7).

41. Siège selon l'une des revendications 13 à 40, **caractérisé en ce qu'**en position couchette, le dossier est sensiblement à l'horizontale.

## Patentansprüche

1. Vorrichtung für den Sitz eines Luftfahrzeugs, bestehend aus einer zwischen einer geraden Sitzposition und einer heruntergeklappten Liegeposition schwenkbaren Rückenlehne (2), so dass eine Sitzfläche (3) des Sitzes eine Positionierung aufweist, die derjenigen der Rückenlehne (2) angepasst ist, mit zwei Trag- und Antriebsbaugruppen (18), die seitlich auf jeder Seite des Sitzes angeordnet sein sollen, wobei jede Baugruppe (18) erste und zweite mechanische, geometrisch verformbare, gelenkige Mittel (19, 20) umfasst, mit mechanischen Verbindungsachsen (16, 28, 31), die einerseits drehbar an der Rückenlehne (2) des Empfangssitzes und andererseits an der Sitzfläche (3) des Empfangssitze angeordnet sind, jeweils in seinem proximalen Teil (21) und seinem distalen (23) Teil in Bezug auf die Rückenlehne (2), die geeignet sind, die Sitzfläche (3) zu tragen und die Bewegungen der Rückenlehne (2) und der Sitzfläche (3) so zu koppeln, dass die Übergangsbewegung der Rückenlehne (2) aus ihrer geraden Sitzposition in ihre Liegeposition zumindest eine Aufwärtsbewegung der Sitzfläche (3) bewirkt, und dass umgekehrt der Übergang der Rückenlehne (2) aus ihrer Liegeposition in ihre gerade Sitzposition zumindest eine gegensätzliche Abwärtsbewegung der Sitzfläche (3) bewirkt, **dadurch gekennzeichnet, dass** die ersten und zweiten Mittel (19, 20) jeweils der beiden Baugruppen (18) jedes zwei Stangen (24, 25, 26, 27) umfassen, die an ihren beiden ersten Endteilen gelenkig miteinander verbunden sind, wobei eine erste Stange (24, 26) jedes der beiden Mittel (19, 20) dazu bestimmt ist, um an ihrem zweiten Endteil um eine Achse (16) der Rückenlehne herum an die Rückenlehne (2) angelenkt zu werden, und wobei eine zweite Stange (25, 27) jedes der beiden Mittel (19, 20) dazu bestimmt ist, um Achsen (28, 31) der Sitzfläche (3) herum an die Sitzfläche (3) angelenkt zu werden, wobei eine der beiden Stangen (24, 25, 26, 27) dazu bestimmt ist, an einen zum Grundgestell (1) gehörigen Teil des Sitzes um eine Achse (29, 32) des Grundgestells (1) herum angelenkt zu werden.

2. Vorrichtung nach Anspruch 1, **dadurch gekennzeichnet, dass** die ersten und zweiten Mittel (19, 20) jeder der beiden Baugruppen (18) die Bewegungen der Rückenlehne (2) und der Sitzfläche (3) so koppeln sollen, dass die Übergangsbewegung der Rückenlehne (2) aus ihrer geraden Sitzposition in ihre Liegeposition ebenfalls eine kombinierte allgemeine Annäherungsbewegung der Sitzfläche (3) zur Rückenlehne (2) hin bewirkt, und dass umgekehrt der Übergang der Rückenlehne (2) aus ihrer Liegeposition in ihre gerade Sitzposition eine entgegengesetzte Entfernungsbewegung der Sitzfläche (3) bewirkt.

3. Vorrichtung nach Anspruch 1 oder 2, **dadurch gekennzeichnet, dass** die Aufwärts-/Abwärtsbewegung vorne an der Sitzfläche (3) gegen die Rückenlehne (2) stärker ist als nach hinten in Nähe der Rückenlehne (2).

4. Vorrichtung nach einem der Ansprüche 1 bis 3, **dadurch gekennzeichnet, dass** die ersten Mittel (19) jeder der beiden Baugruppen (18) zwei Stangen (24, 25) umfassen, die an ihren beiden ersten Endteilen um eine Achse (28) herum gelenkig miteinander verbunden sind, wobei eine erste Stange (24) dazu bestimmt ist, an ihrem zweiten Endteil um eine Achse (16) herum an die Rückenlehne (2) angelenkt zu werden, wobei eine zweite Stange (25) dazu bestimmt ist, an ihrem zweiten Endteil um eine Achse (29) herum an ein zum Grundgestell (1) gehörigen Teil des Sitzes angelenkt zu werden, wobei die beiden Stangen (24, 25) über ihre Gelenkachse (28) der ersten Endteile gelenkig mit der Sitzfläche (3) verbunden sind.

5. Vorrichtung nach Anspruch 4, **dadurch gekennzeichnet, dass** die Gelenkachse (28) der beiden Stangen (24, 25) an der Sitzfläche (3) auf der Ebene der Sitzfläche (3) verschiebbar ist.

6. Vorrichtung nach Anspruch 4 oder 5, **dadurch gekennzeichnet, dass** die beiden Stangen (24, 25) jedes der ersten Mittel (19) geradlinig oder etwa geradlinig verlaufen.

7. Vorrichtung nach einem der Ansprüche 4 bis 6, **dadurch gekennzeichnet, dass** die beiden Stangen (24, 25) jedes der beiden ersten Mittel (19) einen zwischen der Rückenlehne (2) und einem zum Grundgestell (1) des Sitzes gehörigen Teil verformbaren Kompass bilden.

8. Vorrichtung nach einem der Ansprüche 1 bis 3, **dadurch gekennzeichnet, dass** die zweiten Mittel (20) jeder der beiden Baugruppen (18) zwei Stangen (26, 27) umfassen, die an ihren beiden ersten Endteilen um eine Achse (30) herum gelenkig miteinander verbunden sind, wobei eine erste Stange (26) dazu bestimmt ist, an ihrem zweiten Endteil um eine Achse (16) herum an die Rückenlehne (2) angelenkt zu werden, wobei eine zweite Stange (27) dazu bestimmt ist, einerseits an ihrem zweiten Endteil um eine Achse (31) herum an die Sitzfläche (3) und andererseits in ihrem mittleren Teil um eine Achse (32) herum an ein zum Grundgestell (1) gehörigen Teil des Sitzes angelenkt zu werden.

9. Vorrichtung nach Anspruch 8, **dadurch gekennzeichnet, dass** die Gelenkachse (31) der zweiten Stange (27) an der Sitzfläche (3) nicht gleitend ist.

10. Vorrichtung nach Anspruch 8 oder 9, **dadurch gekennzeichnet, dass** die erste Stange (26) geradlinig verläuft und länger ist als die zweite Stange (27), die gekrümmt ist.

11. Vorrichtung nach Anspruch 10, **dadurch gekennzeichnet, dass** die zweite Stange (27) in ihrem mittleren und gekrümmten Teil an den das Grundgestell (1) des Sitzes bildenden Teil angelenkt ist.

12. Vorrichtung nach einem der Ansprüche 1 bis 11, **dadurch gekennzeichnet, dass** jede der Stangen (24, 25, 26, 27) der ersten, zweiten Mittel (19, 20) aus einem oder mehreren Teilen besteht.

13. Sitz eines Luftfahrzeugs mit einem Grundgestell (1), einer um eine Achse (13) herum auf dem Grundgestell montierten Rückenlehne (2) und einer Sitzfläche (3), **dadurch gekennzeichnet, dass** er eine Vorrichtung nach einem der Ansprüche 1 bis 12 umfasst.

14. Sitz nach Anspruch 13, **dadurch gekennzeichnet, dass** die Rückenlehne (2) über der Sitzfläche (3) an das Grundgestell (1) angelenkt und über ihre Gelenkachse (13) hinaus von zwei Flanschen (15) verlängert ist, die seitlich auf beiden Seiten des Sitzes angeordnet sind, an die die ersten und zweiten Mittel (19, 20) jeder der beiden Trag- und Antriebsmittel (18) um eine gemeinsame Achse (16) herum angelenkt sind.

15. Sitz nach Anspruch 13 oder 14, **dadurch gekennzeichnet, dass** die Sitzfläche (3) nur von den beiden Trag- und Antriebsbaugruppen (18) getragen wird.

16. Sitz nach einem der Ansprüche 13 bis 15, **dadurch gekennzeichnet, dass** die Sitzfläche (3) in ihrem proximalen Teil (21) zwei Aussparungen, Gleitschienen oder dergleichen (33) umfasst, die mit einer Gelenkachse (28) der ersten Mittel (19) zusammenwirken.

17. Sitz nach Anspruch 16, **dadurch gekennzeichnet, dass** die beiden Aussparungen, Gleitschienen oder dergleichen (33) mit der Gelenkachse (28) der beiden Stangen (24, 25) der beiden Trag- und Antriebsbaugruppen (18) zusammenwirken.

18. Sitz nach Anspruch 16 oder 17, **dadurch gekennzeichnet, dass** die beiden Aussparungen, Gleitschienen oder dergleichen (33) in zwei an die Sitzflächenwand (5) angrenzenden Seitenkanten (34) vorgesehen sind und sich parallel oder etwa parallel zu dieser Sitzflächenwand (5) erstrecken.

19. Sitz nach Anspruch 18, **dadurch gekennzeichnet, dass** die beiden Kanten 34 nach unten gerichtet sind.

20. Sitz nach einem der Ansprüche 13 bis 19, **dadurch gekennzeichnet, dass** die Sitzfläche (3) in ihrem distalen Teil (23) eine Gelenkachse (31) der zweiten Mittel (20) umfasst.

21. Sitz nach den Ansprüchen 18 und 20, **dadurch gekennzeichnet, dass** die Gelenkachse (31) von den beiden Seitenkanten (34) der Sitzfläche (3) getragen wird.

22. Sitz nach Anspruch 21, **dadurch gekennzeichnet, dass** jede Seitenkante (34) eine ohrenförmige, nach unten gerichtete Ausstülpung (35) umfasst, wo sich die Gelenkachse (31) befindet.

23. Sitz nach einem der Ansprüche 13 bis 22, **dadurch gekennzeichnet, dass** die Vorrichtung (17) zumindest in Sitzposition im wesentlichen unter der Sitzfläche (3) angeordnet ist.

24. Sitz nach einem der Ansprüche 14 bis 22, **dadurch gekennzeichnet, dass** die Flansche (15) eine derartige Länge aufweisen, dass sich die Achse (16) der ersten und zweiten Mittel (19, 20) in gerader Sitzposition in der Nähe der Ebene der Sitzfläche (3) befindet.

25. Sitz nach einem der Ansprüche 13 bis 24, **dadurch gekennzeichnet, dass** sich die Gelenkachse (29) der ersten Mittel (19) des Grundgestells (1) unter und etwa lotrecht zur Gelenkachse (16) der ersten Mittel (19) an der Rückenlehne (2) in Liegeposition befindet.

26. Sitz nach einem der Ansprüche 13 bis 25, **dadurch gekennzeichnet, dass** die beiden Stangen (24, 25) der ersten Mittel (19) in Liegeposition zueinander einen Winkel von etwa 130° bis 160°, insbesondere von etwa 145°, und in gerader Sitzposition einen Winkel von etwa 30° bis 70°, insbesondere von etwa 50°, bilden.

27. Sitz nach einem der Ansprüche 13 bis 26, **dadurch gekennzeichnet, dass** die beiden Stangen (24, 25) der ersten Mittel etwa symmetrisch auf beiden Seiten der Ebene der Sitzfläche (3) angeordnet sind.

28. Sitz nach einem der Ansprüche 13 bis 27, **dadurch gekennzeichnet, dass** sich die Gelenkachse (30) der beiden Stangen (26, 27) der zweiten Mittel (20) unter und etwa lotrecht zur Gelenkachse (32) der zweiten Mittel (20) am Grundgestell (1) befindet.

29. Sitz nach Anspruch 28, **dadurch gekennzeichnet, dass** die Gelenkachse (30) der beiden Stangen (26, 27) der zweiten Mittel (20) jeweils nach hinten und nach vorne in Bezug auf die lotrechte Stellung der Gelenkachse der zweiten Mittel (20) am Grundgestell (1) in gerader Sitz- und Liegeposition verläuft.

30. Sitz nach einem der Ansprüche 13 bis 29, **dadurch gekennzeichnet, dass** sich die Gelenkachsen (29, 32) der ersten und zweiten Mittel (19, 20) am Grundgestell (1) in der Nähe einer gleichen horizontalen Ebene befinden.

31. Sitz nach Anspruch 30, **dadurch gekennzeichnet, dass** sich die Gelenkachse (28) der ersten Mittel (19) auf einer niedrigeren Ebene und die Gelenkachse (31) der zweiten Mittel (20) auf einer höheren Ebene befindet.

32. Sitz nach einem der Ansprüche 13 bis 31, **dadurch gekennzeichnet, dass** die Gelenkachse (32) der zweiten Mittel (20) am Grundgestell (1) etwa lotrecht zum mittleren Teil der Sitzfläche (3) verläuft.

33. Sitz nach einem der Ansprüche 13 bis 32, **dadurch gekennzeichnet, dass** die zweite Stange (27) der zweiten Mittel (20) eine Krümmung von etwa 90° bis 130°, insbesondere von etwa 110°, aufweist.

34. Sitz nach einem der Ansprüche 13 bis 33, **dadurch gekennzeichnet, dass** die Gelenkachse (31) der zweiten Mittel (20) an der Sitzfläche (3) vor der Gelenkachse (30) der beiden Stangen (26, 27) oder der Gelenkachse (32) der zweiten Mittel (20) am Grundgestell (1) angeordnet ist.

35. Sitz nach einem der Ansprüche 13 bis 34, **dadurch gekennzeichnet, dass** die zweite Stange (27) der zweiten Mittel (20) in gerader Sitzposition zum Teil etwa parallel zur Ebene der Sitzfläche verläuft.

36. Sitz nach einem der Ansprüche 13 bis 35, **dadurch gekennzeichnet, dass** der Schwenkweg der Rückenlehne zwischen der Sitzposition und der Liegeposition etwa 60° bis 90°, insbesondere etwa 70°, beträgt.

37. Sitz nach Anspruch 36, **dadurch gekennzeichnet, dass** die Aufwärts-/Abwärtsbewegung der Sitzfläche (3) nach vorne etwa 3 bis 4 Mal größer ist als nach hinten.

38. Sitz nach einem der Ansprüche 13 bis 37, **dadurch gekennzeichnet, dass** die Sitzfläche (3) eine Rotationsbewegungen von einigen Grad hat.

39. Sitz nach einem der Ansprüche 13 bis 38, **dadurch gekennzeichnet, dass** er im übrigen an die Sitzfläche (3) nach vorne angelenkt eine ein- oder mehrgliedrige (8a, 8b, 8c) Bein-/Fußstütze (8) aufweist.

40. Sitz nach einem der Ansprüche 13 bis 39, **dadurch gekennzeichnet, dass** er ebenfalls Sitzflächen- und Rückenlehnenkissen (6, 7) umfasst.

41. Sitz nach einem der Ansprüche 13 bis 40, **dadurch gekennzeichnet, dass** die Rückenlehne in Liegeposition etwa horizontal verläuft.

## Claims

1. A device intended for an aircraft seat, having a backrest (2) pivoting between a straight seat position and a folded-down couchette position so that a squab (3) of the seat has a suitable positioning adapted to that of the backrest (2), having two support and drive assemblies (18) intended to be disposed laterally on each side of the seat, each assembly (18) comprising first and second articulated geometrically deformable mechanical means (19, 20), with axes (16, 28, 31) for mechanical association on the one hand with pivoting of the backrest (2) of the seat for which it is intended, and on the other hand with the squab (3) of the seat for which it is intended respectively in its proximal (21) and distal (23) parts with respect to the backrest (2), able to support the squab (3) and to couple the movements of the backrest (2) and squab (3) so that the movement of the backrest (2) passing from its straight seat position to its couchette position causes at least one movement of raising the squab (3) and so that, conversely, the passage of the backrest (2) from its couchette position to its straight seat position causes at least an opposite movement of lowering of the squab (3), **characterised in that** the first and second means (19, 20) respectively of each of the two assemblies (18) each comprise two connecting rods (24, 25, 26, 27) articulated on each other at their first two end parts, a first connecting rod (24, 26) of each of the two means (19, 20) being intended to be articulated at its second end part on the backrest (2) about an axis (16) of the backrest and a second connecting rod (25, 27) of each of the two means (19, 20) being intended to be articulated on the squab (3) about axes (28, 31) of the squab (3), one of the two connecting rods (24, 25, 26, 27) being intended to be articulated on a part of the seat belonging to the frame (1), about an axis (29, 32) of the frame (1).

2. A device according to Claim 1, **characterised in that** the function of the first and second means (19, 20) of each of the two assemblies (18) is to couple the movements of the backrest (2) and squab (3) so that the movement of the backrest (2) passing from its straight seat position to its couchette position also causes a combined movement of general approach of the squab (3) towards the backrest (2) and so that, conversely, the passage of the backrest (2) from its couchette position to its straight seat position causes an opposite movement away from the squab (3).

3. A device according to Claim 1 or 2, **characterised in that** the raising/lowering movement is greater towards the front of the squab (3) opposite to the backrest (2) than towards the rear close to the backrest (2).

4. A device according to one of Claims 1 to 3, **characterised in that** the first means (19) of each of the two assemblies (18) comprise two connecting rods (24, 25) articulated on each other at their first two end parts about an axis (28), a first connecting rod (24) being intended to be articulated at its second end part on the backrest (2) about an axis (16), a second connecting rod (25) being intended to be articulated at its second end part on a part of the seat belonging to the frame (1), about an axis (29), the two connecting rods (24, 25) being articulated on the squab (3) through their axis of articulation (28) of the first end parts.

5. A device according to Claim 4, **characterised in that** the axis of articulation (28) of the two connecting rods (24, 25) on the squab (3) is for sliding in the plane of the squab (3).

6. A device according to Claim 4 or 5, **characterised in that** the two connecting rods (24, 25) of each of the first means (19) are rectilinear or substantially rectilinear.

7. A device according to one of Claims 4 to 6, **characterised in that** the two connecting rods (24, 25) of each of the first means (19) form a deformable pair of arms interposed between the backrest (2) and a part of the seat belonging to the frame (1).

8. A device according to one of Claims 1 to 3, **characterised in that** the second means (20) of each of the two assemblies (18) comprise two connecting rods (26, 27) articulated on each other at their first two end parts about an axis (30), a first connecting rod (26) being intended to be articulated at its second end part on the backrest (2) about an axis (16), a second connecting rod (27) being intended to be articulated on the one hand on its second end part on the squab (3) about an axis (31) and on the other hand in its middle part at a part of the seat belonging to the frame (1) about an axis (32).

9. A device according to Claim 8, **characterised in that** the axis of articulation (31) of the second connecting rod (27) on the seat (3) is without sliding.

10. A device according to Claim 8 or 9, **characterised in that** the first connecting rod (26) is rectilinear and longer than the second connecting rod (27), which is angled.

11. A device according to Claim 10, **characterised in that** the second connecting rod (27) is articulated on the part of the seat forming a frame (1) in its middle angled part.

12. A device according to one of Claims 1 to 11, **characterised in that** each of the connecting rods (24, 25, 26, 27) forming part of the first and second means (19, 20) is in a single piece or produced in several parts.

13. An aircraft seat having a frame (1), a backrest (2) mounted so as to pivot on the frame about an axis (13) and a squab (3), **characterised in that** it includes a device according to one of Claims 1 to 12.

14. A seat according to Claim 13, **characterised in that** the backrest (2) is articulated on the frame (1) above the seat (3) and extended, beyond its axis of articulation (13), by two plates (15), situated laterally on each side of the seat, on which there are articulated the first and second means (19, 20) of each of the two support and drive assemblies (18) about a common axis (16).

15. A seat according to Claim 13 or 14, **characterised in that** the squab (3) is supported solely by the two support and drive assemblies (18).

16. A seat according to one of Claims 13 to 15, **characterised in that** the squab (3) has in its proximal part (21) two slots, runners or equivalent (33) cooperating with an axis of articulation (28) for the first means (19).

17. A seat according to Claim 16, **characterised in that** the two slots, runners or equivalent (33) cooperate with the axis of articulation (28) of the two connecting rods (24, 25) of the two support and drive assemblies (18).

18. A seat according to Claim 16 or 17, **characterised in that** the two slots, runners or equivalent (33) are provided in two lateral flanges (34) contiguous with the squab wall (5) and extending parallel or substantially parallel to this squab wall (5).

19. A seat according to Claim 18, **characterised in that** the two flanges (34) are directed downwards.

20. A seat according to one of Claims 13 to 19, **characterised in that** the seat (3) has in its distal part (23) an articulation axis (31) for the second means (20).

21. A seat according to Claims 18 and 20, **characterised in that** the articulation axis (31) is carried by the two lateral flanges (34) on the squab (3).

22. A seat according to Claim 21, **characterised in that** each lateral flange (34) has a protrusion (35) in the form of a lug, directed downwards where the articulation axis (31) is situated.

23. A seat according to one of Claims 13 to 22, **characterised in that**, at least in the seat position, the device (17) is substantially placed below the squab (3).

24. A seat according to one of Claims 14 to 22, **characterised in that** the plates (15) have a length such that, in the straight seat position, the axis (16) of the first and second means (19, 20) is situated close to the plane of the squab (3).

25. A seat according to one of Claims 13 to 24, **characterised in that** the articulation axis (29) of the first means (19) of the frame (1) is situated below and substantially vertically in line with the axis of articulation (16) of the first means (19) on the squab (2) in the couchette position.

26. A seat according to one of Claims 13 to 25, **characterised in that** the two connecting rods (24, 25) of the first means (19) form between them an angle of the order of 130° to 160°, notably around 145°, in the couchette position, and of the order of 30° to 70°, notably around 50°, in the straight seat position.

27. A seat according to one of Claims 13 to 26, **characterised in that** the two connecting rods (24, 25) of the first means are disposed substantially symmetrically on each side of the plane of the squab (3).

28. A seat according to one of Claims 13 to 27, **characterised in that** the articulation axis (30) of the two connecting rods (26, 27) of the second means (20) is situated below and substantially vertically in line with the axis of articulation (32) of the second means (20) on the frame (1).

29. A seat according to Claim 28, **characterised in that** the articulation axis (30) of the two connecting rods (26, 27) of the second means (20) is situated respectively towards the rear and towards the front with respect to the perpendicular to the axis of articulation of the second means (20) on the frame (1) in the straight seat and couchette position.

30. A seat according to one of Claims 13 to 29, **characterised in that** the axes of articulation (29, 32) of the first and second means (19, 20) on the frame (1) are situated in the vicinity of the same horizontal plane.

31. A seat according to Claim 30, **characterised in that** the axis of articulation (28) of the first means (19) is situated at a lower level and the axis of articulation (31) of the second means (20) at a higher level.

32. A seat according to one of Claims 13 to 31, **characterised in that** the axis of articulation (32) of the second means (20) on the frame (1) is situated substantially vertically in line with the middle part of the squab (3).

33. A seat according to one of Claims 13 to 32, **characterised in that** the second connecting rod (27) of the second means (20) forms an elbow of the order of 90° to 130°, notably around 110°.

34. A seat according to one of Claims 13 to 33, **characterised in that** the axis of articulation (31) of the second means (20) on the squab (3) is situated towards the front of the axis of articulation (30) of the two connecting rods (26, 27) or of the axis of articulation (32) of the second means (20) on the frame (1).

35. A seat according to one of Claims 13 to 34, **characterised in that** the second connecting rod (27) of the second means (20) extends, in the straight seat position, partly substantially parallel to the squab plane.

36. A seat according to one of Claims 13 to 35, **characterised in that** the pivoting travel of the backrest between the seat position and the couchette position is of the order of 60° to 90°, notably of the order of 70°.

37. A seat according to Claim 36, **characterised in that** the raising/lowering position of the squab (3) is of the order of three to four times greater towards the front than towards the rear.

38. A seat according to one of Claims 13 to 37, **characterised in that** the squab (3) has a rotation movement of the order of a few degrees.

39. A seat according to one of Claims 13 to 38, **characterised in that** it also has, articulated on the squab (3) towards the front, a leg/foot rest (8) in one or more articulated parts (8a, 8b, 8c).

40. A seat according to one of Claims 13 to 39, **characterised in that** it also has squab and backrest cushions (6, 7).

41. A seat according to one of Claims 13 to 40, **characterised in that**, in the couchette position, the backrest is substantially horizontal.
